# EUROPEAN PATENT SPECIFICATION

(11) **EP 3 747 275 B1**
(45) Date of publication and mention of the grant of the patent: **25.03.2026**
(21) Application number: 19178069.1
(22) Date of filing: 04.06.2019
(51) Int. Cl.: A23G 1/00, A23G 1/30, A23G 1/32

(54) **COCOA EXTRACTION METHODS AND TECHNIQUES**
KAKAOEXTRAKTIONSVERFAHREN UND -TECHNIKEN
PROCÉDÉS ET TECHNIQUES D'EXTRACTION DU CACAO

(43) Date of publication of application: 09.12.2020
(73) Proprietor: ODC Lizenz AG, 8807 Freienbach (CH)
(72) Inventor: Hühn, Tilo, 8824 Schönenberg (CH)
(74) Representative: Grünecker Patent- und Rechtsanwälte PartG mbB

(56) References cited:
- EP-A1- 0 988 794
- EP-A1- 3 114 942
- WO-A1-2008/131910
- WO-A2-01/93690
- US-A- 2 954 293
- US-A1- 2008 317 891
- US-A1- 2010 055 248

## Description

### FIELD OF INVENTION

This invention relates to improved methods and/or techniques for processing and/or extracting materials from cocoa beans using organic solvents. In certain embodiments, this invention relates to cocoa bean processing methods (e.g., using unfermented, fermented, roasted or non-roasted beans or combinations thereof) which result in cocoa extracts and products with increased yield of cocoa butter, antioxidants and/or vitamins.

### BACKGROUND OF THE INVENTION

Cocoa (*Theobroma cacao L*.) is widely recognized as an important source of healthy ingredients, including minerals, vitamins, polyphenols (especially catechins, anthocyanidins and proanthocyanidins), and antioxidants such as flavonoids, which are inter alia physiologically active in the reduction of oxidative stress, inhibition of low-density lipoproteins (LDL) oxidation and platelet aggregation, and are acting as vasodilators in blood vessels.

During conventional processing of cocoa beans in the manufacture of cocoa-based foodstuffs, which typically involves fermentation and drying/roasting at high temperatures, the content of polyphenols, antioxidants, and/or vitamins is reduced when compared to their contents in raw cocoa beans. An additional problem is the destruction of cellular compartments of the raw cocoa materials due to high mechanical loads or shear stresses and/or high heat employed which aids in the extraction of cocoa fats. Examples of such methods are disclosed in WO 2008/131910 A1, EP 0 988 794 A1, US 2008/317891, US 2010/055248 A1, US 2 954 293 A and WO 01/93690 A2.

Therefore, alternative cocoa bean processing methods have been developed in order to preserve higher contents of valuable components. For instance, WO 2010/073117, EP 3 114 940 B1, EP 3 114 941 B1, EP 3 114 942 B1 and EP 3 114 939 B1 disclose methods for processing cocoa beans comprising the formation of a suspension comprising cocoa beans or nibs and water, wet grinding the suspended beans or nibs, heating the suspension, and decanting the same such that said suspension is separated into a water phase, a fat phase and a solid phase, in order to avoid liquefaction of the cocoa fat and formation of a chocolate liqueur during mechanical processing, which exerts lower thermal burden on the cocoa mass compared to conventional methods and hence preserves higher contents of polyphenols, antioxidants and/or vitamins.

While the aforementioned methods provide advantages with respect to the preservation of heat-sensitive healthy ingredients, a more efficient separation between each of the nutritionally beneficial components and further improved yields of cocoa butter and both hydrophilic and lipophilic nutritionally beneficial components in the resulting extracts is sometimes desired.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for processing cocoa beans or nibs comprising the steps of: adding a first extraction agent to cocoa beans or nibs to form a suspension; wet grinding said suspension; separating the suspension into a first liquid phase, a second liquid phase and a solid phase, said second liquid phase comprising cocoa butter as a major component and solids and/or first extraction agent as minor components and said solid phase comprising cocoa powder and first extraction agent; and separately processing the three phases, comprising separating cocoa aroma and/or polyphenolic concentrate from at least the polar liquid phase, to obtain a cocoa aroma extract and/or a polyphenolic concentrate; wherein the first extraction agent comprises one or more organic solvents at a content of 50 to 100 % by weight of the first extraction agent.

In an alternative embodiment, the present invention relates to a method for processing cocoa beans or nibs comprising the steps of: adding a first extraction agent to cocoa beans or nibs to form a suspension; wet grinding said suspension; separating the suspension into a first liquid phase, a second liquid phase and a solid phase, said second liquid phase comprising cocoa butter as a major component and solids and/or first extraction agent as minor components and said solid phase comprising cocoa powder and first extraction agent; and separately processing the three phases to obtain a cocoa aroma extract and/or a polyphenolic concentrate; wherein the first extraction agent is water, and wherein a second extraction agent is used to obtain a cocoa aroma extract and/or a polyphenolic concentrate in the step of separately processing the three phases, the second extraction agent comprising one or more organic solvents at a content of 50 to 100 % by weight of the second extraction agent.

In another aspect, the present invention provides a method for producing chocolate or chocolate-like products comprising the steps of: processing cocoa beans or nibs according to the methods described above, separating cocoa butter from the second liquid phase, and separating cocoa powder from the solid phase, recombining the cocoa aroma extract with the cocoa butter extract; mixing the recombined extracts with the cocoa powder extract, polyphenolic concentrate and/or milk powder; and conching said mixture.

### BRIEF DESCRIPTION OF THE DRAWINGS

FIG. 1 illustrates an exemplary method for processing the cocoa beans up to the provision of cocoa aroma, cocoa powder, cocoa butter and polyphenolic concentrate extracts according to the first embodiment of the present invention
FIG. 2 schematically shows an exemplary method for processing the cocoa beans up to the provision of cocoa aroma, cocoa powder, cocoa butter and polyphenolic concentrate extracts according to the second embodiment of the present invention
FIG. 3 illustrates an exemplary method for preparing dark chocolate/milk chocolate using the extracts obtained in the first and/or second embodiments.

### DETAILED DESCRIPTION OF THE INVENTION

For a more complete understanding of the present invention, reference is now made to the following description of the illustrative embodiments thereof:

### Methods of Processing Cocoa Beans and/or Nibs

The method for processing cocoa beans or nibs according to a first embodiment of the present invention is generally characterized by the steps of: adding a first extraction agent to cocoa beans or nibs to form a suspension; wet grinding said suspension; separating the suspension into three phases, i.e. a first liquid phase, a second liquid phase and a solid phase, said second liquid phase comprising cocoa butter as a major component and solids and/or first extraction agent as minor components and said solid phase comprising cocoa powder and first extraction agent; and separately processing the three phases, comprising separating cocoa aroma and/or polyphenolic concentrate from at least the polar liquid phase, to obtain a cocoa aroma extract and/or a polyphenolic concentrate; wherein the first extraction agent comprises one or more organic solvents at a content of 50 to 100% by weight of the first extraction agent.

In the method according to the first embodiment, the one or more organic solvents comprised in the first extraction agent are not particularly limited and may be appropriately selected by the skilled artisan as long as they promote and do not interfere with the phase separation between the first liquid phase and the second liquid phase. In other words, the terms "first liquid phase" and "second liquid phase", as used herein, denote separate liquid phases that are immiscible under the physical conditions at which the three-phase separation is performed. In particular, the term "second liquid phase" typically defines a non-polar liquid phase comprising cocoa butter as a major component, which is immiscible with the hydrophilic liquid phase referred to as "first liquid phase".

In the first embodiment, the first extraction agent preferably comprises one or more organic solvents at a content of 70 to 100% by weight, or 90 to 100% by weight.

In preferred embodiments, the first extraction agent may further comprise water at a content of less than 30% by weight, less than 10% by weight or less than 5% by weight, in combination with one or more organic solvents which may be miscible or immiscible with water under the extraction conditions. Said water may be incorporated in the given contents by means of water-containing liquids, such as fruit juices or milk, for example.

Depending on the target material to be extracted and the desired use of the extracts (e.g. use of cocoa butter for cosmetic products as opposed to food processing), the one or more organic solvents are preferably selected from the group of C₁-C₈ alcohols, C₂-C₈ ketones, C₃-C₇ esters, C₂-C₈ ethers, C₄-C₁₀ lactates, halogenated C₁-C₈ hydrocarbons and C₁-C₈ alkanes, preferably from C₁-C₈ alcohols, C₁-C₈ alkanes, C₂-C₈ ethers, further preferably from the group of methanol, ethanol, isopropanol, acetone, methyl acetates, ethyl acetates, diethylether, methyl t-butyl ether and hexane, especially preferably from ethanol, hexane and methyl t-butyl ether. In a particularly preferred embodiment, the organic solvent is ethanol.

In preferred embodiments, the first extraction agent may comprise an acidic component (including, but not limited to acetic acid, citric acid, or other acids) that is provided in addition to acetic and/or citric acid formed by microbial activity in the beans, which enables further development of chocolate flavor and efficient extraction at low temperatures.

The cocoa processing technique generally begins with forming a suspension of cocoa beans or nibs by adding the first extraction agent, either prior or during the grinding of the cocoa beans/nibs. Depending on the desired use of the resulting extracts, unfermented or underfermented cocoa beans and nibs may be used (together with or without pulp and mucilage), as well as whole fermented or incubated beans (including beans incubated according to US 8,501,256 B2 or WO 2014/130539 A1, for example) or fermented or incubated beans which are subsequently subjected to a breaking step during which the beans are broken into smaller, non-whole bean particles (e.g., cocoa nibs). While not being limited thereto, the cocoa beans or nibs may have been subjected to roasting or pre-drying prior to the preparation of the suspension. In order to achieve an optimized yield of polyphenols, antioxidants and/or vitamins, it is preferable to prepare the suspension with unfermented green beans obtained directly upon opening of the cocoa pods, especially preferably together with the pulp and mucilage present in the pods.

While not being particularly limited, the weight ratio of first extraction agent to cocoa beans/nibs in the formed suspension is preferably between 1:1 to 6:1, more preferably 2:1 to 4:1, especially preferably about 3:1, which may advantageously affect the processability in the further steps (e.g. facilitated pumping, grinding and easier phase separation).

The cocoa beans/nibs are subjected to a single or multiple wet grinding step(s), which result in bean particle sizes of preferably 50 µm or smaller, more preferably 40 µm or smaller, even more preferably 20 µm or smaller. Reducing the bean particles to such a size range substantially increases the exposed surface area of the bean particle material therefore enhancing the wetting with the solvent for improved extraction results (such as improved extraction of fats or lipids, aromatic substances, and/or polyphenols). The bean particle size reduction may be accomplished by using disc mills (e.g. perforated disc mill), colloid mills (e.g. toothed colloid mills), or corundum stone mills, for example. It is preferable that in at least one grinding step, cocoa bean cells are macerated to enable the first extraction agent to wet the cocoa bean material better due to increased available surface area of the macerated cocoa beans. The methods and devices used for wet milling are not particularly limited as long as undesirable emulsification by significant frictional heat production or high mechanical forces is avoided. For example, when using multiple grinding steps, a coarse wet grinding step (e.g., optionally with further extraction agent) may be carried out using a perforated disc mill, and the coarsely milled suspension may be pumped to a toothed colloid mill for a fine grinding step.

After the wet grinding step, the suspension may be subjected to a thermal treatment at a temperature of no more than approximately 70°C in order to reduce the overall thermal load and prevent emulsification. From the viewpoint of a favorable balance of cocoa butter yield and preservation of desirable flavors, such as aromatics, anti-oxidants and/or vitamins, heating temperatures of less than 65°C are preferable. In terms of cocoa butter liquefaction and/or improved mechanical phase separation, a heating temperature range of from 30 to 50°C is particularly preferable. Without being limited thereto, heating of the wet-milled suspension may be carried out by a scrap or tube heat exchanger.

Thereafter, phase separation is carried out so that three phases, i.e. the first liquid phase, the second liquid phase, which is immiscible with the first liquid phase, and a solid phase are obtained, said second liquid phase comprising cocoa butter as a major component and solids and/or water as minor components and said solid phase comprising cocoa powder and first extraction agent. In addition, the solid phase may comprise residual cocoa butter in a content of up to 30% by weight, preferably less than 27% by weight, more preferably less than 20% by weight relative to the total dry weight. Preferably, devices employing centrifugal forces may be utilized to achieve mechanical particle separations, such as decanters or nozzle separators. For instance, the suspension may be decanted to separate coarse or large or high mass solids from liquid(s) and then smaller and/or fine solid particles may be further separated from liquids and/or oil products may be separated from non-oil products.

Multiple phase separation and recombination steps may be employed to achieve an improved separation between the first liquid phase, the second liquid phase and the solid phase. For example, the second liquid phase obtained by an initial decanting step may be further filtered or centrifuged to separate remaining fine particles or the first extraction agent from the second liquid phase and the thus obtained fine particles and first extraction agent may be recombined with the first extraction agent and solid phases from the initial decanting step or at a later processing stage of said phases. Also, the first liquid phase may be subjected to further purification steps, e.g. by filtration using vacuum rotation filters in order to remove fine particles and reduce cloudiness of the liquid.

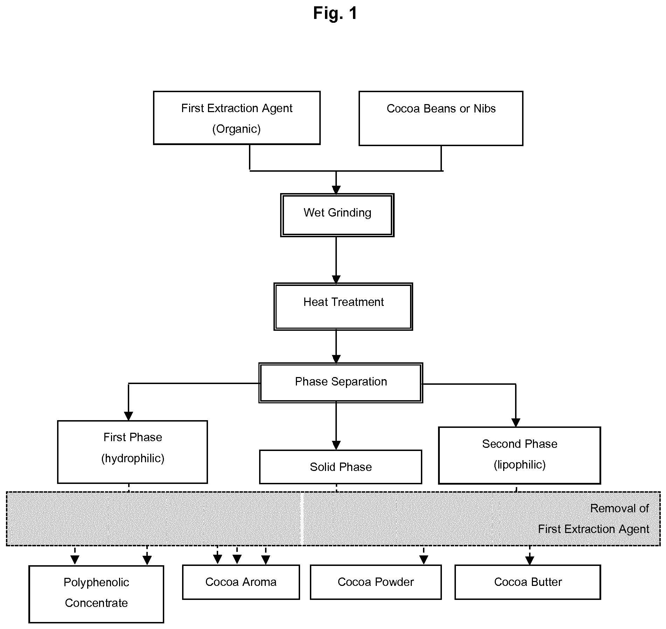

Upon separation of the three phases, these may be independently processed to separate cocoa aroma (mainly from the first liquid phase) and a polyphenolic concentrate (mainly from the first liquid phase), cocoa butter (mainly from the second liquid phase) and cocoa powder (mainly from the solid phase), as is illustrated by Fig. 1.

As indicated above, the second liquid phase may be filtered (e.g. by employing a vibrating screen) and/or conveyed to a 3-phase separator (e.g. centrifuge) to remove fine particles (which may be optionally added to the solid phase prior or during a drying/roasting step) and residue water (which may be optionally added to the first liquid phase prior to aroma recovery). Cocoa butter is mainly obtained from the second liquid phase upon filtration and purification.

The organic solvent(s) are preferably removed in the step of separately processing the three phases. While the corresponding techniques are not specifically limited, distillation, salting-out or combinations thereof are preferred.

In preferred embodiments, each of the above-described cocoa processing steps are performed at temperatures of no more than 70°C.

The (wet) solid phase obtained after separation in the three phases may be optionally treated with a heatable roll grinder to reduce particle size and begin pre-drying. Also, sugar, sugar solution and/or fruit juices may optionally be added to separated cocoa solids before drying to improve flavor development during the drying/roasting process.

The solid phase obtained after separation in the three phases may be gently dried and simultaneously roasted at a temperature of between 55 and 100°C, from the viewpoint of reducing the thermal load and preserving the health-inducing components preferably at a temperature selected from between 55 and 70°C under reduced pressure, in order to allow roasted flavors and other aromatics to be collected. If desired, said flavors and other aromatics may be added to the cocoa butter or to the aroma recovery step of the first liquid phase in the further progress of the cocoa bean processing method.

The method of carrying out the drying/roasting is not particularly limited and may e.g. be accomplished in a drum dryer. In a preferred embodiment, the drying/roasting step is carried out with a mixing device in accordance with EP 3 114 941 B1.

In general, it will be preferred each of said cocoa processing steps are performed at temperatures of 70°C or lower.

In a second embodiment, the present invention relates to a method for processing cocoa beans or nibs comprising the steps of: adding a first extraction agent to cocoa beans or nibs to form a suspension; wet grinding said suspension; subjecting said suspension to a heat treatment at a temperature of 70°C or less; separating the suspension into a first liquid phase, a second liquid phase and a solid phase, said second liquid phase comprising cocoa butter as a major component and solids and/or first extraction agent as minor components and said solid phase comprising cocoa powder and first extraction agent; and separately processing the three phases to obtain a cocoa aroma extract and/or a polyphenolic concentrate; wherein the first extraction agent is water, and wherein a second extraction agent is used to obtain a cocoa aroma extract and/or a polyphenolic concentrate in the step of separately processing the three phases, the second extraction agent comprising one or more organic solvents at a content of 50 to 100 % by weight of the second extraction agent.

Accordingly, the second embodiment differs from the first embodiment in that the first extraction agent is water and the one or more organic solvents are used in a second extraction agent during the step of separately processing the three phases. Apart from that, it will be understood that the preferred features of the first embodiment may be freely combined with the second embodiment in any combination, except for combinations where at least some of the features are mutually exclusive.

The method according to the second embodiment advantageously allows to selectively enhance the extraction and yield of the components comprised in one or two of the three phases (e.g. extraction of cocoa butter from the second liquid phase and/or extraction of polyphenols from the first liquid phase) while preventing another phase (e.g. the solid phase) from contacting organic solvents. In this way, the yield of nutritionally beneficial components and/or valuable cocoa butter may be selectively optimized while keeping the use of organic solvents at a minimum.

As in the first embodiment, the one or more organic solvents may be suitably selected depending on the target material to be extracted and the desired use of the extracts, and exemplary solvents are mentioned above.

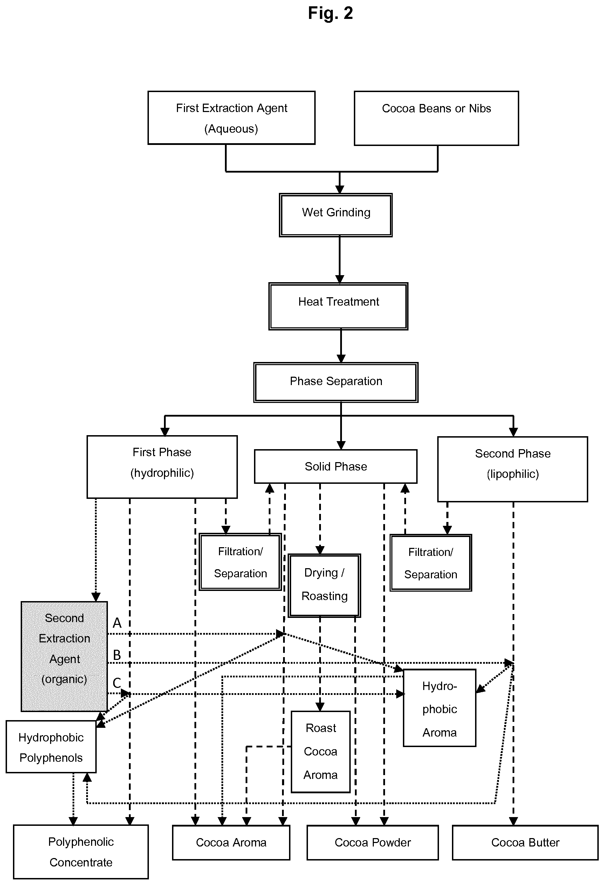

An exemplary method of a cocoa bean processing technique according to the second embodiment is illustrated in Fig. 2.

In a preferred embodiment, the solid phase is subjected to an extraction step with the second extraction agent (see A in Fig. 2). For instance, residues of cocoa butter may be extracted from the solid phase by using a non-polar second extraction agent (such as a C₁-C₈ alkane (e.g. hexane, heptane or cyclohexane) or a C₂-C₈ ethers (e.g. methyl t-butyl ether or diethyl ether), for example), organic solvent may be removed and the dry extract may be recombined with cocoa butter obtained from the second phase in order to optimize cocoa butter yield. Alternatively or successively, residues (including polyphenols such as catechin, epicatechin and procyanidin) soluble in a hydrophilic second extraction agent (such as C₁-C₈ alcohols or acetone, for example) may be extracted from the solid phase.

In another preferred embodiment, the second phase is subjected to an extraction step with the second extraction agent (see B in Fig. 2), which enables recovery of residual polyphenols and/or nutritionally valuable components with poor solubility in water through extraction with weakly polar or lipophilic solvents, drying, and recombination with the polyphenolic concentrate obtained from the concentration of the first phase. Also, extraction of the second phase enables separation of undesired lipophilic substances, such as polycyclic aromatic hydrocarbon (PAH) contaminations (which may result from poor cocoa bean drying conditions on asphalt, on bitumen in the sun, or by using direct drying processes, or from contaminations due to batching oil in packaging during storage or transport).

In a further preferred embodiment, the yield of cocoa aroma may be enhanced by combining hydrophilic cocoa flavors obtained by separation of water from the first phase (by evaporating water or by reverse distillation, for example) with lipophilic cocoa flavors obtained from extraction of the second phase with a hydrophobic second extraction agent.

The second extraction agent may further be applied to the first liquid phase (e.g., to further extract residues of hydrophobic aromas or hydrophobic polyphenols) in order to further enhance the yield and purity of the extracts (see C in Fig. 2).

In general, it is noted that steps A, B C in Fig. 2 may be applied selectively (that is only one or two of steps A, B, and/or C) or in combination. It is also understood that the method illustrated in Fig. 2 is exemplary only. For instance, in some embodiments, the second extraction agent may be used for separation and purification of the already processed polyphenolic concentrate, cocoa aroma, cocoa powder and/or cocoa butter extracts (not shown in Fig. 2)

In the method of the second embodiment, the extraction step using the second extraction agent is preferably performed at a temperature between 0°C to 45 °C, further preferably at a temperature between 10 and 30 °C, and especially preferably at room temperature.

In general, if there is microorganism spoilage of cocoa extracted materials (i.e. cocoa butter, cocoa powder, cocoa aroma and polyphenolic concentrate), such material can be deodorized employing a vacuum de-aerator. Moreover, if microorganism contamination occurs, a high pressure treatment such as pascalisation is possible (e.g., which is desirable because it can preserve aromatic compounds). However, if both microorganism spoilage and contamination occurs, heat treatment and deodorization may be employed. However, the methods according to the present invention allow a fast processing of the cocoa beans/nibs, so that growth of microorganisms may be kept at a minimum.

Using the herein described technique(s), cocoa beans may be efficiently processed to produce significantly enhanced yields of cocoa butter, cocoa flavors, and polyphenol concentrates. Moreover, certain resultant cocoa extracts retain or contain desirable levels of anti-oxidants and/or vitamins and/or possess more desirable flavors.

While not being limited thereto, cocoa extracts obtained by the method according to the present invention may be incorporated into food, food supplements and used for therapeutic purposes. In addition, cocoa butter may be used in cosmetic products (e.g. in lotions), health-care products (including natural health-care products), and combinations of the latter (topical preparations, etc.).

### Methods for Manufacturing Chocolate Products

In a third embodiment, the present invention provides a method for producing chocolate or chocolate-like products comprising the steps of: processing cocoa beans or nibs according to the first or second embodiments, separating cocoa butter from the second phase, and separating cocoa powder from the solid phase, recombining the cocoa aroma extract with the cocoa butter extract; mixing the recombined extracts with the cocoa powder extract, polyphenolic concentrate and/or milk powder; and conching said mixture.

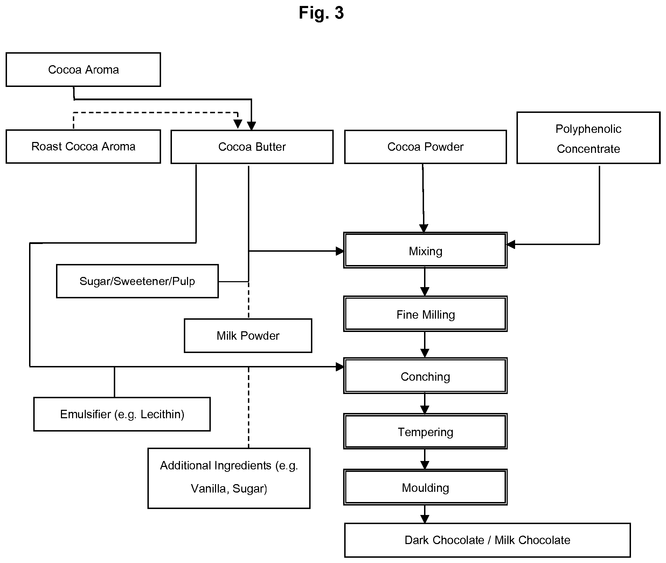

Fig. 3 illustrates an example of a method for the preparation of dark chocolate and milk chocolate, wherein the cocoa aroma extracts obtained from dearomatisation of the first phase and/or optionally the roasted cocoa aroma obtained from the drying/roasting step are first added to the cocoa butter. Before being subjected to a conching step, the dried and roasted solid cocoa powder is mixed with cocoa butter with added aroma and fine milled. Polyphenolic concentrate may be added to the mixture as desired to provide more intense flavors and higher contents of anti-oxidants in the final product. Additional tailoring of flavor or development of flavor may be performed by adding one or more of sugar, sweetener, cocoa pulp and/or fruit juices. For the preparation of milk chocolate, milk powder is further added, preferably prior to the mixing step. Optionally, an emulsifying agent (e.g. lecithin) may be added prior to conching to reduce viscosity, control sugar crystallization and the flow properties of chocolate, and help in the homogeneous mixing of ingredients. Also, additional ingredients and flavors, such as e.g. vanilla, rum and so on may be added prior to or during the conching step, and after conching (e.g. sea salt, fleur de sel, nuts and raisins).

The conching process redistributes into the fat phase the substances from the dry cocoa that create flavor, while removing unwanted acetic, propionic, and butyric acids from the chocolate, reducing moisture, and mellowing the flavor of the product. The temperature of the conche is controlled and varies depending on the different types of chocolate (from around 49 °C for milk chocolate to up to 82 °C for dark chocolate). While being to some degree dependent on the temperature, the conching duration in conventional chocolate manufacturing processes generally ranges from 16 up to 72 hours in order to achieve good results. In the method according to the present invention, the conching duration is preferably less than 16 hours, more preferably less than 12 hours, typically 10 hours or less. Thus, a loss of desirable aroma characteristics as observed at long conching times does not occur.

The chocolate or chocolate-like products obtained by the methods of the present invention may take any suitable form and may, for example, be packaged and sold as a block or a bar, be filled and may be used as a coating, be used in other confectionery and bakery applications (e.g. as a cake coating or filling, a biscuit coating or filling, a sponge coating or filling or a coating layer for an ice cream). Also, the obtained chocolate or chocolate-like products may optionally have further additives added prior to the final use of the product.

## Claims

1. A method for processing cocoa beans or nibs comprising the steps of:
adding a first extraction agent to cocoa beans or nibs to form a suspension;
wet grinding said suspension;
separating the suspension into a first liquid phase, a second liquid phase and a solid phase, said second liquid phase comprising cocoa butter as a major component and solids and/or first extraction agent as minor components and said solid phase comprising cocoa powder and first extraction agent; and
separately processing the three phases, comprising separating cocoa aroma and/or polyphenolic concentrate from at least the first phase, to obtain a cocoa aroma extract and/or a polyphenolic concentrate;
wherein the first extraction agent comprises one or more organic solvents at a content of 50 to 100 % by weight of the first extraction agent, or
wherein the first extraction agent is water, and a second extraction agent is used to obtain a cocoa aroma extract and/or a polyphenolic concentrate in the step of separately processing the three phases, the second extraction agent comprising one or more organic solvents at a content of 50 to 100 % by weight of the second extraction agent.

2. The method according to claim 1, wherein in the step of separately processing the three phases, cocoa aroma and/or polyphenolic concentrate are further extracted from the second phase and the solid phase and recombined with the cocoa aroma extract and/or the polyphenolic concentrate obtained from the first phase.

3. The method according to claim 1 or 2, wherein the first extraction agent comprises one or more organic solvents at a content of 70 to 100 % by weight of the first extraction agent, such as 90 to 100 % by weight.

4. The method according to claim 1,
wherein the first extraction agent is water, and wherein a second extraction agent is used to obtain a cocoa aroma extract and/or a polyphenolic concentrate in the step of separately processing the three phases, the second extraction agent comprising one or more organic solvents at a content of 50 to 100 % by weight of the second extraction agent.

5. The method according to claim 4, wherein in the step of separately processing the three phases, the solid phase is subjected to an extraction step with the second extraction agent.

6. The method according to claim 4, wherein the solid phase is dried in a dryer after separation in three phases to obtain cocoa aroma and cocoa solids, and the dried cocoa solids are subjected to an extraction step with the second extraction agent to obtain a cocoa aroma extract and/or a polyphenolic concentrate.

7. The method according to any of claims 4 to 6, wherein in the step of separately processing the three phases, the second phase is subjected to an extraction step with the second extraction agent.

8. The method according to any of claims 4 to 7, wherein the second extraction agent comprises one or more organic solvents at a content of 70 to 100 % by weight of the second extraction agent, such as 90 to 100 % by weight.

9. The method according to any of claims 1 to 8, wherein the one or more organic solvents are selected from the group of C₁-C₈ alcohols, C₂-C₈ ketones, C₃-C₇ esters, C₂-C₈ ethers, C₄-C₁₀ lactates, halogenated C₁-C₈ hydrocarbons and C₁-C₈ alkanes, preferably from C₁-C₈ alcohols, C₁-C₈ alkanes, C₂-C₈ ethers, preferably from the group of methanol, ethanol, isopropanol, acetone, methyl acetates, ethyl acetates, diethylether, methyl t-butyl ether and hexane, and further preferably from ethanol, hexane and methyl t-butyl ether.

10. The method according to claim 7, wherein the second extraction agent is selected from one or more C₁-C₈ alkanes, preferably hexane.

11. The method according to any of the preceding claims, wherein the one or more organic solvents are removed in the step of separately processing the three phases by distillation, salting-out or combinations thereof.

12. The method according to any of the preceding claims, wherein each of said cocoa processing steps are performed at temperatures of no more than 70°C.

13. A method for producing chocolate or chocolate-like products comprising the steps of:
processing cocoa beans or nibs according to claims 1 to 12,
separating cocoa butter from the second phase, and
separating cocoa powder from the solid phase,
recombining the cocoa aroma extract with the cocoa butter extract; mixing the recombined extracts with the cocoa powder extract, polyphenolic concentrate and/or milk powder; and
conching said mixture.

## Patentansprüche

1. Verfahren zur Verarbeitung von Kakaobohnen oder -nibs, umfassend die folgenden Schritte:
Hinzufügen eines ersten Extraktionsmittels zu Kakaobohnen oder -nibs, um eine Suspension zu bilden;
Nassmahlen der Suspension;
Trennen der Suspension in eine erste flüssige Phase, eine zweite flüssige Phase und eine feste Phase, wobei die zweite flüssige Phase Kakaobutter als Hauptkomponente und Feststoffe und/oder das erste Extraktionsmittel als Nebenkomponenten umfasst und die feste Phase Kakaopulver und das erste Extraktionsmittel umfasst; und
getrenntes Verarbeiten der drei Phasen, einschließlich der Abtrennung von Kakaoaroma und/oder Polyphenolkonzentrat aus mindestens der ersten Phase, um einen Kakaoaromaextrakt und/oder ein Polyphenolkonzentrat zu erhalten;
wobei das erste Extraktionsmittel ein oder mehrere organische Lösungsmittel in einem Gehalt von 50 bis 100 Gew.-% des ersten Extraktionsmittels umfasst, oder
wobei das erste Extraktionsmittel Wasser ist und ein zweites Extraktionsmittel verwendet wird, um einen Kakaoaromaextrakt und/oder ein Polyphenolkonzentrat in dem Schritt der getrennten Verarbeitung der drei Phasen zu erhalten, und das zweite Extraktionsmittel ein oder mehrere organische Lösungsmittel mit einem Gehalt von 50 bis 100 Gew.-% des zweiten Extraktionsmittels umfasst.

2. Verfahren nach Anspruch 1, wobei in dem Schritt des getrennten Verarbeitens der drei Phasen ferner Kakaoaroma und/oder Polyphenolkonzentrat aus der zweiten Phase und der festen Phase extrahiert und mit dem Kakaoaromaextrakt und/oder dem Polyphenolkonzentrat, die aus der ersten Phase erhalten wurden, wiedervereinigt werden.

3. Verfahren nach Anspruch 1 oder 2, wobei das erste Extraktionsmittel ein oder mehrere organische Lösungsmittel mit einem Gehalt von 70 bis 100 Gew.-% des ersten Extraktionsmittels, beispielsweise 90 bis 100 Gew.-%, umfasst.

4. Verfahren nach Anspruch 1, wobei das erste Extraktionsmittel Wasser ist und wobei ein zweites Extraktionsmittel verwendet wird, um einen Kakaoaromaextrakt und/oder ein Polyphenolkonzentrat in dem Schritt desgetrennten Verarbeitens der drei Phasen zu erhalten, wobei das zweite Extraktionsmittel ein oder mehrere organische Lösungsmittel in einem Gehalt von 50 bis 100 Gew.-% des zweiten Extraktionsmittels umfasst.

5. Verfahren nach Anspruch 4, wobei in dem Schritt des getrennten Verarbeitens der drei Phasen die feste Phase einem Extraktionsschritt mit dem zweiten Extraktionsmittel unterzogen wird.

6. Verfahren nach Anspruch 4, wobei die feste Phase nach der Trennung in drei Phasen in einem Trockner getrocknet wird, um Kakaoaroma und Kakaofeststoffe zu erhalten, und die getrockneten Kakaofeststoffe einem Extraktionsschritt mit dem zweiten Extraktionsmittel unterzogen werden, um einen Kakaoaromaextrakt und/oder ein Polyphenolkonzentrat zu erhalten.

7. Verfahren nach einem der Ansprüche 4 bis 6, wobei in dem Schritt des getrennten Verarbeitens der drei Phasen die zweite Phase einem Extraktionsschritt mit dem zweiten Extraktionsmittel unterzogen wird.

8. Verfahren nach einem der Ansprüche 4 bis 7, wobei das zweite Extraktionsmittel ein oder mehrere organische Lösungsmittel in einem Gehalt von 70 bis 100 Gew.-% des zweiten Extraktionsmittels, beispielsweise 90 bis 100 Gew.-%, umfasst.

9. Verfahren nach einem der Ansprüche 1 bis 8, wobei das eine oder die mehreren organischen Lösungsmittel aus der Gruppe der C₁-C₈-Alkohole, C₂-C₈-Ketone, C₃-C₇-Ester, C₂-C₈-Ether, C₄-C₁₀-Lactate, halogenierten C₁-C6-Kohlenwasserstoffe und C₁-C₈-Alkane ausgewählt sind, vorzugsweise aus C₁-C₈-Alkoholen, C₁-C₈-Alkanen, C₂-C₈-Ethern, vorzugsweise aus der Gruppe von Methanol, Ethanol, Isopropanol, Aceton, Methylacetaten, Ethylacetaten, Diethylether, Methyl-t-butylether und Hexan, und weiter bevorzugt aus Ethanol, Hexan und Methyl-t-butylether.

10. Verfahren nach Anspruch 7, wobei das zweite Extraktionsmittel aus einem oder mehreren C₁-C₈-Alkanen, vorzugsweise Hexan, ausgewählt ist.

11. Verfahren nach einem der vorstehenden Ansprüche, wobei das eine oder die mehreren organischen Lösungsmittel in dem Schritt der getrennten Verarbeitung der drei Phasen mittels Destillation, Aussalzen oder Kombinationen davon entfernt werden.

12. Verfahren nach einem der vorstehenden Ansprüche, wobei jeder der Kakaoverarbeitungsschritte bei Temperaturen von 70 °C oder weniger durchgeführt wird.

13. Verfahren zur Herstellung von Schokolade oder schokoladenähnlichen Produkten, umfassend die folgenden Schritte:
Verarbeiten von Kakaobohnen oder -nibs gemäß den Ansprüchen 1 bis 12,
Abtrennen von Kakaobutter aus der zweiten Phase und
Abtrennen von Kakaopulver aus der festen Phase,
Rekombinieren des Kakaoaromaextrakts mit dem Kakaobutterextrakt;
Mischen der rekombinierten Extrakte mit dem Kakaopulverextrakt, dem Polyphenolkonzentrat und/oder Milchpulver; und
Conchieren der Mischung.

## Revendications

1. Procédé de traitement de fèves ou grués de cacao comprenant les étapes consistant à :
ajouter un premier agent d'extraction à des fèves ou grués de cacao pour former une suspension ;
broyer en voie humide ladite suspension ;
séparer la suspension en une première phase liquide, une seconde phase liquide et une phase solide, ladite seconde phase liquide comprenant du beurre de cacao comme composant majoritaire et des solides et/ou le premier agent d'extraction comme composants minoritaires, et ladite phase solide comprenant de la poudre de cacao et le premier agent d'extraction ; et
traiter séparément les trois phases, comprenant la séparation d'un d'arôme de cacao et/ou d'un concentré polyphénolique à partir d'au moins la première phase, afin d'obtenir un extrait d'arôme de cacao et/ou un concentré polyphénolique ;
dans lequel le premier agent d'extraction comprend un ou plusieurs solvants organiques à une teneur de 50 à 100 % en poids du premier agent d'extraction ; ou
dans lequel le premier agent d'extraction est de l'eau, et un second agent d'extraction est utilisé pour obtenir un extrait d'arôme de cacao et/ou un concentré polyphénolique lors de l'étape de traitement séparé des trois phases, le second agent d'extraction comprenant un ou plusieurs solvants organiques à une teneur de 50 à 100 % en poids du second agent d'extraction.

2. Procédé selon la revendication 1, dans lequel, lors de l'étape de traitement séparé des trois phases, un arôme de cacao et/ ou un concentré polyphénolique sont en outre extraits de la seconde phase et de la phase solide et recombinés avec l'extrait d'arôme de cacao et/ou le concentré polyphénolique obtenus à partir de la première phase.

3. Procédé selon la revendication 1 ou 2, dans lequel le premier agent d'extraction comprend un ou plusieurs solvants organiques à une teneur de 70 à 100 % en poids du premier agent d'extraction, telle que de 90 à 100 % en poids.

4. Procédé selon la revendication 1,
dans lequel le premier agent d'extraction est de l'eau, et dans lequel un second agent d'extraction est utilisé pour obtenir un extrait d'arôme de cacao et/ou un concentré polyphénolique lors de l'étape de traitement séparé des trois phases, le second agent d'extraction comprenant un ou plusieurs solvants organiques à une teneur de 50 à 100 % en poids du second agent d'extraction.

5. Procédé selon la revendication 4, dans lequel, lors de l'étape de traitement séparé des trois phases, la phase solide est soumise à une étape d'extraction avec le second agent d'extraction.

6. Procédé selon la revendication 4, dans lequel la phase solide est séchée dans un séchoir après la séparation en trois phases afin d'obtenir un arôme de cacao et des matières solides de cacao, et les matières solides de cacao séchées sont soumises à une étape d'extraction avec le second agent d'extraction afin d'obtenir un extrait d'arôme de cacao et/ou un concentré polyphénolique.

7. Procédé selon l'une quelconque des revendications 4 à 6, dans lequel, lors de l'étape de traitement séparé des trois phases, la seconde phase est soumise à une étape d'extraction avec le second agent d'extraction.

8. Procédé selon l'une quelconque des revendications 4 à 7, dans lequel le second agent d'extraction comprend un ou plusieurs solvants organiques à une teneur de 70 à 100 % en poids du second agent d'extraction, telle que de 90 à 100 % en poids.

9. Procédé selon l'une quelconque des revendications 1 à 8, dans lequel les un ou plusieurs solvants organiques sont sélectionnés parmi le groupe constitué d'alcools en C₁-C₈, cétones en C₂-C₈, esters en C₃-C₇, éthers en C₂-C₈, lactates en C₄-C₁₀, hydrocarbures halogénés en C₁-C₆ et alcanes en C₁-C₈, de préférence parmi des alcools en C₁-C₈, alcanes en C₁-C₈, éthers en C₂-C₈, de préférence parmi le groupe constitué de méthanol, éthanol, isopropanol, acétone, acétates de méthyle, acétates d'éthyle, éther de diéthyle, éther de méthyl-tert-butyle et hexane, et plus préférentiellement parmi de l'éthanol, hexane et éther de méthyl-tert-butyle.

10. Procédé selon la revendication 7, dans lequel le second agent d'extraction est sélectionné parmi un ou plusieurs alcanes en C₁-C₈, de préférence hexane.

11. Procédé selon l'une quelconque des revendications précédentes, dans lequel les un ou plusieurs solvants organiques sont éliminés lors de l'étape de traitement séparé des trois phases par distillation, relargage ou combinaisons de ceux-ci.

12. Procédé selon l'une quelconque des revendications précédentes, dans lequel chacune desdites étapes de traitement de cacao est réalisée à des températures de pas plus de 70 °C.

13. Procédé de production de chocolat ou de produits de type chocolat comprenant les étapes consistant à :
traiter des fèves ou grués de cacao selon les revendications 1 à 12,
séparer du beurre de cacao à partir de la seconde phase ; et
séparer de la poudre de cacao à partir de la phase solide ;
recombiner l'extrait d'arôme de cacao avec l'extrait de beurre de cacao ; mélanger les extraits recombinés avec l'extrait de poudre de cacao, un concentré polyphénolique et/ou de la poudre de lait ; et
concher ledit mélange.
